# EUROPEAN PATENT APPLICATION

(11) **EP 2 777 860 A2**
(43) Date of publication of application: **17.09.2014**
(21) Application number: 14154433.8
(22) Date of filing: 10.02.2014
(51) Int. Cl.: B23K 26/00, B08B 7/00

(54) **Process and apparatus for cleaning a surface**

(30) Priority: 15.02.2013 GB 201302627
(71) Applicant: Rolls-Royce plc, London SW1E 6AT (GB)
(72) Inventor: Grafton-Reed, Clive, Leicester, Leicestershire LE9 6QB (GB); Whitehead, David, Bolton, Leicestershire BL2 6HU (GB); Cheetham, Simon, Chorley, PR6 8AG (GB); Marimuthu, Sundar, Loughborough, LE11 4EQ (GB)
(74) Representative: Roberts, Nicholas John

(57) **Abstract**

A method of cleaning a surface comprising the steps of directing a laser beam to the surface at a predetermined location and capturing for the predetermined location a) data relating to an acoustic response induced by interaction of the laser with the surface, b) data relating to the optical reflectivity of the surface at the predetermined location, and c) data relating to the spectrographic response of a plume generated by interaction of the laser with the surface.

## Description

The present invention relates to a method and apparatus for cleaning a surface and particularly for laser cleaning a surface.

A laser directed at a surface can be used to remove contaminants and offers a number of advantages over other more chemical or mechanical process in terms of preciseness and controllability.

It is an object of the present invention to seek to provide an improved method of laser cleaning and apparatus for laser cleaning which permits in-process monitoring.

According to a first aspect of the invention there is provided a method of cleaning a surface comprising the steps of directing a laser beam to the surface at a predetermined location and capturing for the predetermined location a) data relating to an acoustic response induced by interaction of the laser with the surface, b) data relating to the optical reflectivity of the surface at the predetermined location, and c) data relating to the spectrographic response of a plume generated by interaction of the laser with the surface.

Advantageously, the use of multiple sensors, each montoring a separate variable, improves the accuracy of the cleaning and can obviate the need for unnecessary cleaning. This is important as every impact by the laser on the surface can, over time, damage the surface requiring the component with the surface to be scrapped.

The acoustic response may be captured by an acoustic sensor such as a microphone or other suitable sensor that can give a signal that is indicative of an acoustic wave.

The optical reflectivity response may be captured by a camera, photo cell or other suitable sensor that can give a signal that is indicative of optical reflectivity.

The spectrographic response may be captured by a spectrometer or other suitable sensor that can give a signal that is indicative of the chemical composition of a plume induced by interaction of the laser with the surface.

Other sensors may be used to record or capture information e.g. surface roughness or laser system parameter data.

Preferably the captured data relating to the optical reflectivity at the predetermined location comprises a first value taken prior to interaction of the laser with the surface and a second value taken after interaction of the laser with the surface.

This offers the advantage that it is possible to compare the state of the surface both before and after impact from the laser. A single value for the captured data may be obtained by subtracting the second value from the first value, or vice versa.

Preferably the data relating to the acoustic response, the data relating to the optical reflectivity and the data relating to the spectrographic response are combined to give a single numerical value for the predetermined location.

A scaling factor may be applied to the acoustic response data, the optical reflectivity data and / or the spectrographic response data prior to combination. The scaling factors may be individually and separately selected to promote one signal over any other signal. Changes to the scaling factor may be made, for example, depending on the material of the surface or deposits, the laser type or the finish or roughness of the surface.

The single numerical value may be assigned a colour and displayed against the predetermined position in an image. This graphical display advantageously permits an operator to quickly and simply identify the cleanliness of the surface.

The single numerical value may be compared to a threshold value to indicate whether the surface at the predetermined location passes as clean.

Preferably the method comprises further cleaning at the predetermined location if the surface at the predetermined location does not pass as clean when the single numerical value is compared to the threshold value.

Although it is preferred that the further cleaning comprises directing a laser beam to the predetermined location that has been identified as not being clean it is possible to use other chemical or mechanical cleaning approaches for some surfaces and deposits as required.

Preferably the laser beam is sequentially directed to a plurality of predetermined locations, wherein for every predetermined location there is captured a) data relating to an acoustic response induced by interaction of the laser with the surface, b) data relating to the optical reflectivity of the surface at the predetermined location, and c) data relating to the spectrographic response of a plume generated by interaction of the laser with the surface.

Advantageously, this allows the operator to build up an image of the surface which includes the captured data for every predetermined location on the surface. The details of the captured data, because it is linked to positional data on the surface, can be interrogated and separated into its constituent values for greater understanding of the cleanliness of the surface following the cleaning process.

According to a second aspect of the invention there is provided apparatus for cleaning a surface, the apparatus comprising:
a. a beam generator for directing a beam to the surface at a predetermined location;
b. an acoustic sensor for capturing data relating to an acoustic response induced by interaction of the beam with the surface;
c. an optical reflectivity sensor for capturing data relating to the optical reflectivity of the surface at the predetermined location;
d. a spectrometer for capturing data relating to the spectrographic response of a plume generated by interaction of the beam with the surface.

Preferably the apparatus further comprises an integrating unit for integrating the data captured by the acoustic sensor, the optical reflectivity sensor and the spectrometer.

The apparatus may further comprise a display device for displaying the integrated data against the predetermined position.

Preferably the apparatus further comprises a comparison unit for comparing the integrated data with a threshold value.

Preferably the apparatus further comprises a movement mechanism for moving the beam relative to the surface from the predetermined location to a further predetermined location.

The invention will now be described by with reference to the accompanying drawings, and by way of example only, in which:
Fig.1 depicts exemplary apparatus for a cleaning process
Fig. 2 depicts a block diagram of an apparatus for a laser cleaning process
Fig. 3 depicts an integration system for a laser cleaning apparatus

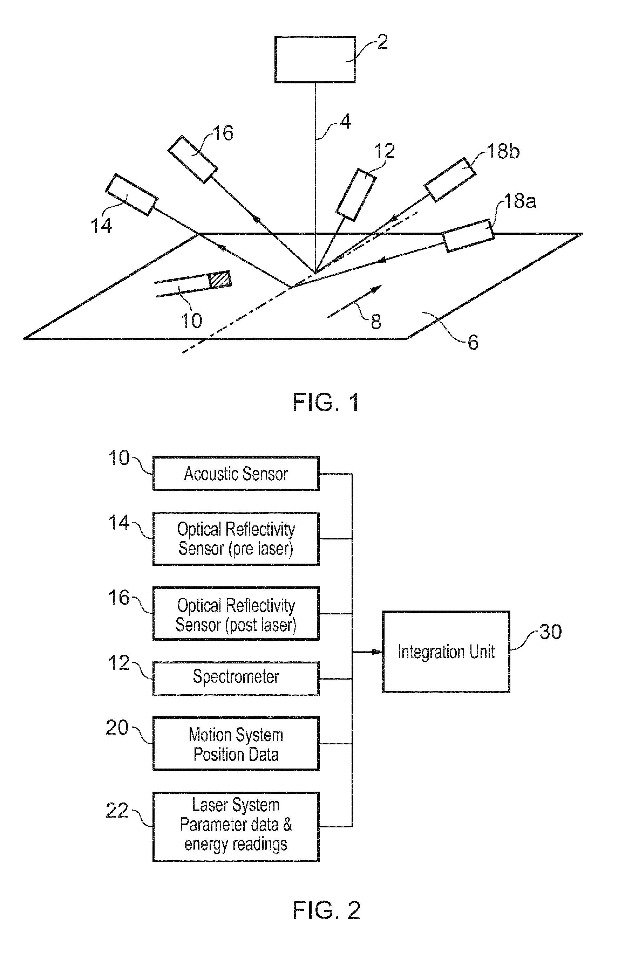

Figure 1 depicts laser cleaning apparatus in accordance with the invention. The laser 2 is arranged to direct a beam 4 onto the surface of a substrate 6 to be cleaned. The substrate 6 can move relative to the beam 4 in the direction of arrow 8. The relative movement can be achieved by a either physically moving the laser source 2, the substrate 6 or a deflector (not shown) that deflects the beam or a combination of the three. Depending on the size of the substrate it is often easier to move this than the laser source.

In the embodiment shown the substrate is an aerofoil skin being prepared for diffusion bonding to a further skin prior to inflation to form a wide chord blade. The material of the substrate is titanium and it is important to clean the surface to ensure a robust bond. The use of laser cleaning to clean the aerofoil skins offers a number of advantages. First, the aerofoil skin does not require cleaning in every location and the ability for a laser to selectively clean is beneficial as the areas that do not require cleaning can be passed over without treatment. Secondly, the process is dry as no liquid is used in the cleaning. Thirdly, the cleaning can be used later in the process to remove applied "stop-off" material that is used to prevent bonding of the skins in selected locations. In some circumstances the stop-off material can be incorrectly or inaccurately positioned allowing the laser clean to better define the edge of the stop-off material.

The laser is an excimer laser operating at a wavelength of around 248nm though other lasers e.g. CO2 lasers operating at a wavelength of 9.6microns can also be used.

A multi-sensor system monitors the cleanliness of the surface of the component 6 both before, during and after a predetermined position is cleaned by the laser. The first sensor is a microphone 10 which captures acoustic emissions as the laser interacts with the surface or deposits on the surface. The noise signature for a clean surface is different to that of a dirty surface. The second sensor 12 is a spectrometer that monitors the chemistry of the plume emitted by the interaction of the laser with the surface. It is desirable that both the first and second sensor are directed at the point of maximum sensitivity; for the acoustic sensor that position is directly at the point of interaction of the laser with the surface; for the spectrometer the point is a short distance from the surface where the plume forms and mixes.

Optical reflectivity sensors monitor the substrate a short distance before 14 and after 16 the point of laser intersection with the substrate. The location is preferably away from the plume to avoid the plume giving a false reading. Each of the sensors captures the reflected light from a respective light source 18a, 18b.

The location of the point of intersection of the laser with the substrate is captured and the captured values for reflectivity, chemistry and acoustics aligned with the positional information. It is necessary to provide a correction factor to align the offset reflectivity readings to the intersection point of the laser and the substrate. It is also desirable to calculate the change in the reflectivity data caused by the cleaning process by subtracting the reading taken after cleaning from the reading taken before cleaning.

The acoustic data is preferably correlated with a known signal which indicates the level of cleanliness as the process is carried out.

The captured data is fed into an integration unit 30 which combines them to give a single value assigned to the position data 20. Further data 22 may also be captured which corresponds to the laser system parameter data and energy readings, temperature, surface roughness etc.

The sensor signals are correlated against their individual references and given a weighting in the overall assessment. The assessment of cleanliness score is then correlated to a position on the part by taking the positional information.

The combined signal is correlated to a colour and plotted on a graphical interface to the positional data to allow the laser operator to judge the progress and acceptability of the cleaning process at a specific location. Due to the large volume of data it is possible to select points to display on a grid basis and provide an override for any results outside the allowable range to be flagged rather than only those points on a grid point. This mitigates the risk of missing unclean areas due to the position sampling selected.

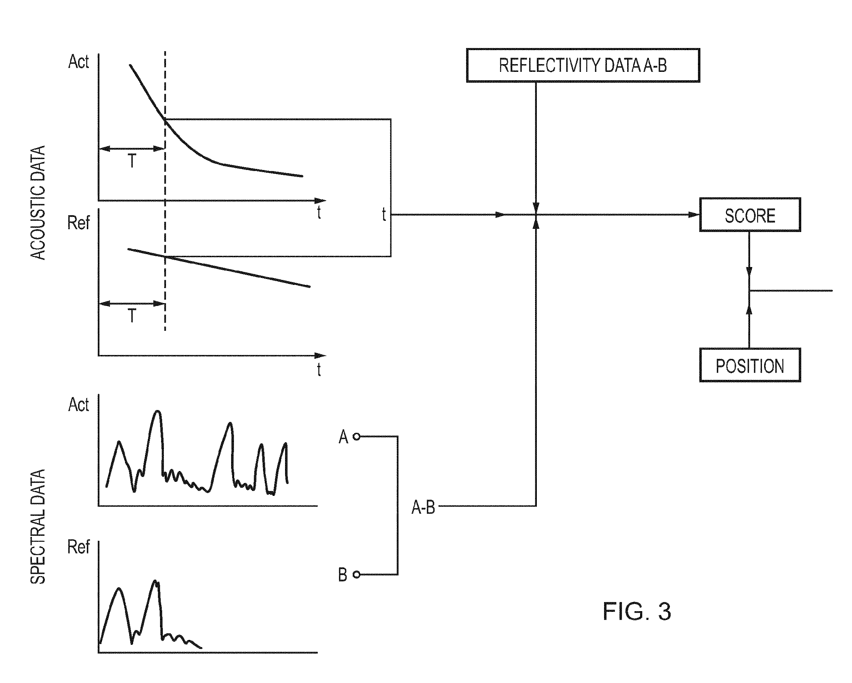

Figure 3 depicts the method of combining the data values to arrive at a score. An actual acoustic response and a reference acoustic response for a clean surface are sampled at a given time period T following impact of the laser on the substrate. These values are summed.

The actual spectral data following interaction of the laser with the surface is modified by subtracting the reference spectral data produced by interaction of the laser with a clean surface. Advantageously the spectral data permits analysis of the chemicals being emitted from the surface.

These two values are combined with the reflectivity data to give a score that is then aligned to the positional data.

Each type of sensor gives a different interpretation of surface cleanliness in such a way that it can be determined that the component is suitably clean without need to remove it from the cleaning machine or applying another process. This allows the cleaning system to be run in a closed loop condition and also reduces the risk of over or under cleaning.

Combining the sensors avoids the risk of "false positives" particularly when used with a weighting system for each sensor and gives a more complete assessment. Where the cleaning needs several passes the system can give an indication of progress rather than a simple pass / fail assessment which a single sensor system is liable to do.

The use of the single scoring system displayed in graphical form allows a quick and easy assessment to be made by an operator without the need to examine the detailed report though, because the data is all aligned to the positional information, it is possible to interrogate the raw data simply.

It is a further advantage that the cleanliness of a surface can be determined on parts where it is preferable to keep the part dry or where other, more conventional tests, cannot be used to complexity in the geometry of the part to be tested.

The invention has been described with respect to aerospace components but has application in other fields e.g. medical where a non-contact method of determining cleanliness is important to ensure sterility.

## Claims

1. A method of cleaning a surface comprising the steps of directing a laser beam to the surface (6) at a predetermined location and capturing for the predetermined location a) data relating to an acoustic response induced by interaction of the laser with the surface, b) data relating to the optical reflectivity of the surface at the predetermined location, and c) data relating to the spectrographic response of a plume generated by interaction of the laser with the surface.

2. A method according to claim 1, wherein the captured data relating to the optical reflectivity at the predetermined location comprises a first value taken prior to interaction of the laser with the surface and a second value taken after interaction of the laser with the surface.

3. A method according to claim 2, wherein the captured data relating to the optical reflectivity at the predetermined location comprises the first value subtracted from the second value.

4. A method according to claim 1, claim 2 or claim 3, wherein the data relating to the acoustic response, the data relating to the optical reflectivity and the data relating to the spectrographic response are combined to give a single numerical value for the predetermined location.

5. A method according to claim 4, wherein a scaling factor is applied to acoustic response data, the optical reflectivity data and / or the spectrographic response data prior to combination.

6. A method according to claim 4 or claim 5, wherein the single numerical value is assigned a colour and displayed against the predetermined position in an image.

7. A method according to any of claim 4 to claim 6, wherein the single numerical value is compared to a threshold value to indicate whether the surface at the predetermined location passes as clean.

8. A method according to claim 7, comprising further cleaning at the predetermined location if the surface at the predetermined location does not pass as clean when the single numerical value is compared to the threshold value.

9. A method according to claim 8, wherein the further cleaning comprises directing a laser beam to the predetermined location.

10. A method according to any preceding claim, wherein the laser beam is sequentially directed to a plurality of predetermined locations, wherein for every predetermined location there is captured a) data relating to an acoustic response induced by interaction of the laser with the surface, b) data relating to the optical reflectivity of the surface at the predetermined location, and c) data relating to the spectrographic response of a plume generated by interaction of the laser with the surface.

11. Apparatus for cleaning a surface, the apparatus comprising:
a. a laser beam generator (2) for directing a laser beam to the surface (6) at a predetermined location;
b. an acoustic sensor (10) for capturing data relating to an acoustic response induced by interaction of the beam with the surface;
c. an optical reflectivity sensor (14, 16) for capturing data relating to the optical reflectivity of the surface at the predetermined location;
d. a spectrometer (12) for capturing data relating to the spectrographic response of a plume generated by interaction of the beam with the surface.

12. Apparatus according to claim 11 further comprising an integrating unit (30) for integrating the data captured by the acoustic sensor, the optical reflectivity sensor and the spectrometer.

13. Apparatus according to claim 12 further comprising a display device for displaying the integrated data against the predetermined position.

14. Apparatus according to claim 12 or claim 13 further comprising a comparison unit for comparing the integrated data with a threshold value.

15. Apparatus according to any of claim 11 to claim 14 further comprising a movement mechanism for moving the beam from the predetermined location to a further predetermined location.
